# EUROPÄISCHE PATENTANMELDUNG

(11) **EP 2 860 014 A1**
(43) Veröffentlichungstag der Anmeldung: **15.04.2015**
(21) Anmeldenummer: 14003452.1
(22) Anmeldetag: 08.10.2014
(51) Int. Cl.: B29C 47/90, B29C 47/92

(54) **Verstellbarer Kalibriereinsatz**

(30) Priorität: 08.10.2013 DE 102013016629
(71) Anmelder: G & G Extrusionstechnik GmbH & Co .KG, 19055 Schwerin (DE)
(72) Erfinder: Graf, Hans Erhard, 19075 Wittenförden (DE)

(57) **Zusammenfassung**

Die Erfindung betrifft einen verstellbaren Kalibrieransatz(1) für extrudierte Kunststoffrohre, der eine hohlzylindrische Kalibrierhülse (7) aufweist, deren Wandung mit mehreren bis zu ihrem Ende verlaufenden Axialschlitzen (32) versehen ist, wobei an diesem Ende eine axial verstellbarer Ringflansch (20) mit geringem axialen Abstand von der Kalibrierhülse (7) angeordnet ist, der Mittel zum radialen Einwirken auf die Außenwandung der Kalbrierhülse (7) aufweist. Aufgabe der Erfindung ist es, einen derartigen Kalibriereinsatz mit einer sehr einfach aufgebauten mechanischen Verstelleinrichtung zur Verfügung zu stellen, der sehr robust ist und kostengünstig herstellbar ist. Gelöst wird diese Aufgabe dadurch, dass an dem Ringflansch (20) auf seinen Umfang verteilt mehrere Verstellfinger (24) befestigt sind, deren freies Ende jeweils auf der Außenwandung der Kalibrierhülse (7) gegen einen Anschlag (26) anliegt.

## Beschreibung

Die Erfindung betrifft einen verstellbaren Kalibriereinsatz für extrudierte Kunststoffrohre gemäß dem Oberbegriff des Anspruchs 1,

Der Innendurchmesser einer Kalibrierhülse derartiger Einsätze ist im laufenden Betrieb einer Extrusionsanlage geringfügig veränderbar. Dadurch ist es möglich, den aus einem Extruder austretenden plastifizierten Kunststoffschlauch unter Berücksichtigung des Schrumpfverhaltens des eingesetzten Kunststoffs genau zu kalibrieren, d. h., den Nenndurchmesser und die Wandstärke des Rohres im Rahmen der einzuhaltenden Toleranzgrenze herzustellen.

Beispiele für derartig arbeitende Kalibrierhülsen sind in der EP 1 157 805 B1, der DE 203 17 940 U1 und der EP 1 048 434 B1 veröffentlicht.

Eine gattungsgemäßer Kalibriereinsatz ist in der DE 10 2009 041628 B4 beschrieben. Dieser Kalibriereinsatz besitzt eine hohlzylindrische Kalibrierhülse, deren Wandung mehrere bis zu einem ihrer Enden verlaufende Axialschlitze aufweist. An dem Ende, an dem diese Axialschlitze auslaufen, ist eine mechanische Verstelleinrichtung für den Außendurchmesser der Kalibrierhülse, und damit auch für deren Innendurchmesser, der für die Kalibrierung des Nenndurchmessers des herzustellenden Rohres wesentlich ist, angeordnet. Die Verstelleinrichtung besteht aus zwei Ringflanschen, deren Innendurchmesser geringfügig größer ist als der Außendurchmesser der Kalibrierhülse im unbeeinflussten Zustand. Die beiden Ringflansche sind in Axialrichtung gegeneinander verstellbar, wobei zwischen ihnen, auf Ihrem Umfang verteilt, eine Vielzahl von Laschen angeordnet sind. Diese Laschen erstrecken sich von den Ringflanschen schräg nach innen und stützen sich direkt oder Indirekt auf der Außenwandung der Kalibrierhülse ab. Wenn die beiden Ringflansche axial aufeinander zu gestellt werden, drücken die Laschen nach Art eines Kniehebels auf die Außenwandung der Kalibrierhülse, so dass diese konzentrisch zusammengedrückt wird, wodurch sich in diesem Bereich der Kalibrierhülse ein geringerer Innendurchmesser einstellt.

Der oben beschriebene Kalibriereinsatz ist aufgrund der sich zwischen den Ringflanschen erstreckenden V-förmigen Laschen in ihrer Herstellung relativ aufwendig.

Aufgabe der vorliegenden Erfindung ist es daher, einen gattungsgemäßen Kalibriereinsatz mit einer sehr einfach aufgebauten mechanischen Verstelleinrichtung zur Verfügung zu stellen, die sehr robust ist und kostengünstig herstellbar ist.

Diese Aufgabe wird erfindungsgemäß mit einem Kalibriereinsatz gelöst, der die Merkmale des Anspruchs 1 aufweist.

Der erfindungsgemäße Kalibriereinsatz weist nur noch einen Ringflansch auf. Von diesem ragen auf den Umfang verteilt mehrere Verstellfinger ab, deren freies Ende auf der Außenseite der Kalibrierhülse aufliegt und sich dort gegen einen Anschlag axial abstützt. Bei einer axialen Verstellung des Ringflansches üben die Verstellfinger einen radialen Druck auf die Kalibrierhülse aus, so dass diese unter Reduzierung ihres Innendurchmessers konzentrisch zusammengedrückt wird.

Die Verstellfinger sind dabei nach einer Ausführungsform der vorliegenden Erfindung starr mit dem Ringflansch verbunden. In diesem Falle sind sie mit einer Federcharakteristik ausgestattet, die zum einen dafür sorgt, dass bei axialer Verstellung des Ringflansches ein ausreichender radialer Druck auf die Außenwandung der Kalibrierhülse aufgebaut wird, und zum anderen dafür, dass der sich bei axialer Verstellung des Ringflansches verringernde Abstand zwischen dem Ringflansch und den Anschlägen durch eine Wölbung der Versteltfinger kompensiert wird.

In einer anderen Ausführungsform der vorliegenden Erfindung sind die Verstellfinger biegesteif ausgeführt. In diesem Falle sind sie drehgelenkig an dem Ringflansch angeschlagen.

Im Folgenden wird ein Ausführungsbeispiel der Erfindung anhand von Zeichnungen näher beschrieben. Es zeigen:
- Fig. 1: einen perspektivischen Blick auf einen Kalibriereinsatz,
- Fig. 2: eine Stimansicht des Kalibriereinsatzes gemäß Fig. 1 in vergrößerter Darstellung,

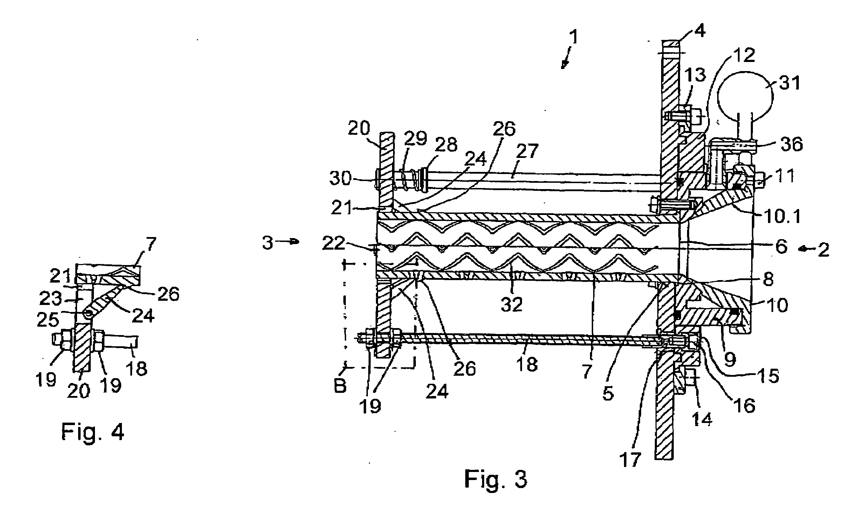

- Fig. 3: einen Schnitt A-A gemäß Fig. 2, und
- Fig. 4: einen vergrößerten Ausschnitt B gemäß Fig. 3.

Der in der Zeichnung dargestellte Kalibriereinsatz 1 besitzt eine Einlaufseite 2 und eine Auslaufseite 3. Auf der Einlaufseite 2 läuft ein von einem nicht dargestellten Extruder kommendes extrudiertes Rohr in den Kalibrieransatz 1 ein und verlässt diesen auf dessen Auslaufseite 3.

Auf seiner Einlaufseite 2 weist der Kalibriereinsatz 1 einen Befestigungsflansch 4 mit einer kreisrunden zentralen Öffnung 5 auf. Diese Öffnung 5 nimmt mit geringem radialen Spiel das Einlaufende 6 einer hohlzylindrischen Kalibrierhülse 7 auf. Das Einlaufende 6 der Kalibrierhülse 7 durchragt die Öffnung 5 und liegt mit einer radialen Schulter 8 auf der Außenseite des Befestigungsflansches 4 an. Die Schulter 8 ist zwischen dem Befestigungsflansch 4 und einem an diesen angeschraubten Befestigungsring 9 gekammert. Auf diese Weise ist die Kalibrierhülse 7 an ihrem Einlaufende 6 sowohl radial als auch axial am Befestigungsflansch 4 festgelegt.

An dem ringförmigen Stirnende des Befestigungsringes 9 ist ein Einlaufkopf 10 durch Verschraubung 11 befestigt. Die Innenwandung 10.1 des Einlaufkopfes 10 verjüngt sich chronisch zum Einlaufende 6 der Kalibrierhülse 7 hin. Auf dem Außenumfang des Befestigungsringes 9 ist ein Verstellring 12 drehbar gelagert. Dieser wird mittels eine Halteringes 13 in Anlage an den Befestigungsflansch 4 gehalten. Der Haltering 13 ist durch Schrauben 14 mit dem Befestigungsflansch 4 verbunden.

Der Verstellring 12 weist zwei sich diametral gegenüberliegende Langlöcher 15 auf, in denen jeweils eine Stellschraube 16 geführt ist. Jede der Stellschrauben 16 ist in eine Gewindebuchse 17 eingeschraubt, die den Befestigungsflansch 4 axial verschiebbar durchsetzt. In die gegenüberliegende Seite der Gewindebuchse 17 ist ein Ende eines Zugankers 18 eingeschraubt, dessen anderes Ende über Kontermuttern 19 an einem Ringflansch 20 festgelegt ist. Der Ringflansch 20 besitzt eine zentrale kreisrunde Öffnung 21, die von dem Auslaufende 22 der Kalibrierhülse 7 durchsetzt wird. Der Durchmesser der Öffnung 21 ist so gewählt, dass er etwas größer als der Außendurchmesser der Kalibrierhülse 7 im unbeeinflussten Zustand ist.

Von der Öffnung 21 erstrecken sich mehrere radial einwärts gerichtete Schlitze 23, die gleichmäßig auf den Umfang des Ringflansches 20 verteilt sind. Die Seitenwände dieser Schlitze 23 nehmen eine an einem Verstellfinger 24 ausgebildete Schwenkachse 25 auf. Das freie Ende der Verstellfinger 24 liegt auf der Außenwandung der Kalibrierhülse 7 gegen einen Anschlag 26 an.

Um jeweils 90° versetzt zu den Zugstangen 18 sind zwei Führungsstangen 27 vorgesehen. Diese Führungsstangen 27 sind mit ihrem einem Ende starr mit Befestigungsflansch 4 verbunden, und durchragen mit ihrem anderen Ende eine Öffnung im Ringflansch 20. Auf den Führungsstangen 27 ist im Abstand vom Ringflansch 20 ein Bund 28 angeordnet. Zwischen diesem Bund 28 und dem Ringflansch 20 ist eine Spiralfeder 29 auf die Führungsstange 27 aufgeschoben. Die Spiralfeder 29 drückt den Ringflansch 20 gegen einen am Ende der Führungsstangen 27 vorgesehen Anschlag 30. Wenn der Ringflansch 20 gegen diesen Anschlag 30 anliegt, liegt ein maximaler Abstand zwischen dem Ringflansch 20 und dem Befestigungsflansch 4 vor. In diesem Zustand üben die Verstellfinger 24 keinen radialen Druck auf die Kalibrierhülse 7 aus.

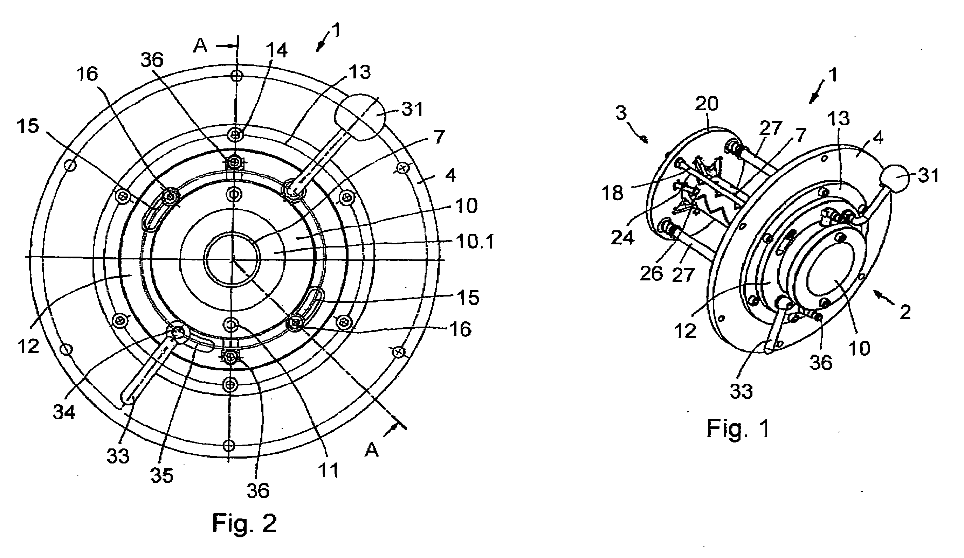

An dem Verstellring 12 ist ein Bedienhebel 31 befestigt. Wird dieser Bedienhebel 31, bezogen auf die Darstellung gemäß Fig. 2 nach rechts gedreht, verschieben sich die Langlöcher 15 relativ zu den Befestigungsschrauben 16, wodurch auf die Befestigungsschrauben 16, z. B. über eine Auflaufschräge Zug ausgeübt wird. Eine maximal mögliche Verstellung ist erreicht, wenn die Stellschrauben 16 an das andere Ende der Langlöcher 15 anschlagen. Der auf die Stellschrauben 16 ausgeübte Zug wird über die Gewindebuchsen 17 auf die Zugstangen 18 übertragen, wodurch der Ringflansch 20 gegen die Kraft der auf den Führungsstangen 27 sitzenden Spiralfedern 29 zum Befestigungsflansch 4 hin axial verlagert wird. Aufgrund dieser Bewegung des Ringflansches 20 üben die Verstellfinger 24 radialen Druck auf die Kalibrierhülse 7 aus. Diese federt dadurch unter Verringerung ihres Durchmessers radial nach innen ein. Um die radiale Elastizität der Kalibrierhülse 7 zu erhöhen, weist diese mehrere, gleichmäßig auf dem Umfang verteilte zickzackförmige Axialschlitze 32 auf. Die Axialschlitze 32 beginnen am Auslaufende 22 der Kalibrierhülse 7und enden kurz vor derem Einlaufende 6. Der sich bei der Verstellbewegung verkürzende Abstand zwischen den Schwenkachsen 25 der Verstellfinger 24 und den Anschlägen 26 der Kalibrierhülse 7 wird durch ein Verschwenken der Verstellfinger 24 um ihre Schwenkachsen 25 kompensiert.

Wenn der gewünschte Innendurchmesser der Kalibrierhülse 7 eingestellt ist, wird diese Einstellung dadurch fixiert, dass ein Feststellhebel 33 festgezogen wird. Dieser Feststellhebel 33 sitzt auf einem Gewindebolzen 34, der in den Befestigungsflansch 4 eingeschraubt ist und ein Langloch 35 im Verstellring 12 durchsetzt. Wird der Feststellhebel 33 gelöst, verschieben die Spiralfedern 29 den Ringflansch 20 wieder in Richtung der Anschläge 30.

Die Verstellfinger 24 können in einer anderen Ausführungsform auch starr mit dem Verstelfflansch 20 verbunden sein. In diesem Fall müssen sie aber mit einer Federcharakteristik ausgeführt sein, um die Abstandsverringerung zwischen dem Ringflansch 20 und den Anschlägen 26 bei Verstellung des Ringflansches zu kompensieren.

Der oben beschriebene Kalibriereinsatz 1 wird in einen nicht dargestelltem Vakuum- und Kühltank einer Extrusionslinie eingebaut. Dazu wird die Kalibrierhülse 7 in eine stirnseitige Öffnung dieses Tanks eingeschoben, bis der Befestigungsflansch 4 an der Auswandung des Tanks anliegt und mit der Stirnwand des Tanks verschraubt werden kann. Die Kalibrierhülse 7 befindet sich dann im Vakuum- und Kühltank, während sich der Einlaufkopf 10 außerhalb des Tanks befindet. Ein von einem nicht dargestelltem Extruder kommendes extrudiertes Rohr läuft über den Einlaufkopf 10 in die Kalibrierhülse 7 ein und wird aufgrund des im Vakuum- und Kühltank herrschenden Unterdrucks gegen die Innenwand der Kalibrierhülse 7 gezogen, wodurch der Außendurchmesser des Rohres festgelegt wird. Das im Einlaufkopf 10 eintretende noch sehr weiche Rohr wird mit Kühlwasser gekühlt. Dazu sind am Einlaufkopf 10 Kühlwasserstutzen 36 angeordnet.

## Patentansprüche

1. Verstellbarer Kalibrieransatz für extrudierte Kunststoffrohre, aufweisend eine hohlzylindrische Kaübrierhülse, deren Wandung mit mehreren bis zu einem ihrer Enden verlaufenden Axialschlitzen versehen ist, wobei an diesem Ende ein axial verstellbarer Ringflansch mit geringem radialen Abstand von der Kalibrierhülse angeordnet ist, der Mittel zum radialen Einwirken auf die Außenwandung der Kalibrierhülse aufweist, **dadurch gekennzeichnet, dass** an dem Ringflansch (20) auf seinen Umfang verteilt mehrere Verstellfinger (24) befestigt sind, deren freies Ende jeweils auf die Außenwandung der Kalibrierhülse (7) gegen einen Anschlag (26) anliegt.

2. Verstellbarer Kalibriereinsatz nach Anspruch 1, **dadurch gekennzeichnet, dass** die Verstellfinger (24) starr mit dem Ringflansch (20) verbunden und einfederbar ausgeführt sind.

3. Verstellbarer Kalibriereinsatz nach Anspruch 1, **dadurch gekennzeichnet, dass** die Verstellfinger (24) jeweils über ein Schwenkgelenk (25) mit dem Ringflansch (20) verbunden sind.
